# EUROPEAN PATENT APPLICATION

(11) **EP 4 782 113 A1**
(43) Date of publication of application: **29.07.2026**
(21) Application number: 25213552.0
(22) Date of filing: 05.11.2025
(51) Int. Cl.: B05C 5/02, B05C 9/06

(54) **SPACER, SLOT DIE, AND METHOD OF COATING ELECTRODE PLATE USING SLOT DIE**

(30) Priority: 12.11.2024 KR 20240160593
(71) Applicant: SAMSUNG SDI CO., LTD., Yongin-si, Gyeonggi-do 17084 (KR)
(72) Inventor: CHOI, Hoiju, 17084 Yongin-si, Gyeonggi-do (KR); YUK, Eunsung, 17084 Yongin-si, Gyeonggi-do (KR); JOO, Minhee, 17084 Yongin-si, Gyeonggi-do (KR); KIM, Hyuksu, 17084 Yongin-si, Gyeonggi-do (KR)
(74) Representative: Michalski Hüttermann & Partner mbB

(57) **Abstract**

Disclosed are a spacer, a slot die, and a method of coating an electrode plate using a slot die. The spacer is configured to be interposed between the upper die and lower die of a slot die and configured to form a gap between the upper die and the lower die. The spacer may include a spacer body part configured to be coupled to the upper die and the lower die and a plurality of insulating liquid discharge parts provided on one side of the spacer body part and configured to discharge an insulating liquid. When an electrode plate is coated through the slot die, slurry may be discharged through an area of the spacer body part other than the insulating liquid discharge parts and the insulating liquid may be discharged through the insulating liquid discharge parts so that the insulating liquid is coated adjacent to ends of the discharged slurry.

## Description

### CROSS-REFERENCE TO RELATED APPLICATION

The present application claims priority of Korean Patent Application No. 10-2024-0160593, filed on November 12, 2024, in the Korean Intellectual Property Office.

### BACKGROUND

### 1. Technical Field

The present disclosure relates to a spacer, a slot die, and a method of coating an electrode plate using a slot die. More particularly, the present disclosure relates to a spacer including a plurality of insulating liquid discharge parts that discharge an insulating liquid, a slot die, and a method of coating an electrode plate using a slot die.

### 2. Related Art

Unlike primary batteries that cannot be recharged, secondary batteries can be discharged and recharged. Low-capacity secondary batteries are used in small portable electronic devices, such as smart phones, feature phones, notebook computers, digital cameras, and camcorders. Large-capacity secondary batteries are widely used as power sources for driving motors, such as of hybrid vehicles or electric vehicles, and for power storage. A secondary battery comprises an electrode assembly includes of a positive electrode and a negative electrode, a case that accommodates the electrode assembly, and a terminal part connected to the electrode assembly.

A lithium secondary battery is manufactured by coating slurry on substrates for a positive electrode and a negative electrode. The coated substrates are then sequentially assembled as the positive electrode and the negative electrode, with separator between the electrodes. When a contact between the positive electrode and the negative electrode occurs in a manufacturing process, a short occurs. In severe cases, the short can lead to a fire.

In a coating process part of a method of manufacturing an electrode plate for a secondary battery, a short can be prevented by coating an insulating liquid on an edge of an electrode that may come into contact with an opposite electrode.

Conventionally, a method of applying the insulating liquid includes various methods, such as a method of simultaneously coating active material slurry and an insulating liquid and a method of applying an insulating liquid on an electrode plate from a nozzle. In the case of the method of simultaneously coating the active material slurry and the insulating liquid, a problem such as breaking a base and a rise in an electrode plate error rate may occur. The problems may arise due to the occurrence of the rising of the electrode plate upon continuous production because the insulating coating liquid is excessively coated on an active material slurry part.

The information disclosed in this background section is for enhancement of understanding of the b the present disclosure. It may contain information that does not constitute related or prior art.

### SUMMARY

Embodiments of the present disclosure are directed to providing a spacer including a plurality of insulating liquid discharge parts that discharges an insulating liquid, a slot die, and a method of coating an electrode plate using a slot die.

The technical problems to be solved by the present disclosure is not limited to the above-described problems, and other problems not mentioned herein, and aspects and features of the present disclosure that would address such problems, will be clearly understood by those skilled in the art from the description below.

In embodiments, a spacer is configured to be interposed between the upper die and lower die of a slot die to form a gap between the upper die and the lower die may include a spacer body part configured to be coupled to the upper die and the lower die and a plurality of insulating liquid discharge parts provided on one side of the spacer body part and configured to discharge an insulating liquid. The spacer is configured such that when an electrode plate is coated through the slot die, slurry may be discharged through an area of the spacer body part other than the insulating liquid discharge parts and the insulating liquid may be discharged through the insulating liquid discharge parts so that the insulating liquid is coated adjacent to ends of the discharged slurry.

In embodiments, a step may be formed in a discharge hole of the insulating liquid discharge part through which the insulating liquid is discharged.

In embodiments, the insulating liquid discharge part may include a discharge body part connected to the spacer body part and a discharge head part forming an insulating liquid flow path and including the discharge hole, the discharge head part being coupled to the discharge body part.

In embodiments, the discharge head part may be detachably coupled to the discharge body part. The insulating liquid discharge part is configured to adjust an amount of the insulating liquid discharged.

In embodiments, the insulating liquid discharge part may include first insulating liquid discharge parts extending from sides at ends of the spacer body part towards an inside of the spacer body part, and second insulating liquid discharge parts provided within the spacer body part at intervals.

In embodiments, the intervals between the second insulating liquid discharge parts may be adjusted on the spacer body part.

In embodiments, a movement groove is formed in the spacer body part, the movement groove being configured to enable the second insulating liquid discharge part to be moved may.

In embodiments, the spacer may further include a fixing part configured to fix the second insulating liquid discharge part to the movement groove after the second insulating liquid discharge part is moved on the spacer body part.

In embodiments, graduations may be indicated in the spacer body part adjacent to the movement groove.

In embodiments, a slot die may include an upper die, a lower die provided under the upper die and a spacer interposed between the upper die and lower die and forming a gap between the upper die and the lower die. The spacer may include a spacer body part coupled to the upper die and the lower die and a plurality of insulating liquid discharge parts provided on a side of the spacer body part and configured to discharge an insulating liquid, wherein the spacer may be configured such that when an electrode plate is coated through the slot die, slurry is discharged through an area of the spacer body part other than the insulating liquid discharge parts and the insulating liquid is discharged through the insulating liquid discharge parts so that the insulating liquid is coated adjacent to ends of the discharged slurry.

In embodiments, a step may be formed in a discharge hole of the insulating liquid discharge part through which the insulating liquid is discharged.

In embodiments, the insulating liquid discharge part may include a discharge body part connected to the spacer body part and a discharge head part forming an insulating liquid flow path and including the discharge hole, the discharge head part being coupled to the discharge body part.

In embodiments, the discharge head part may be detachably coupled to the discharge body part. The insulating liquid discharge part may be configured to adjust the amount of the insulating liquid discharged.

In embodiments, the insulating liquid discharge part may include first insulating liquid discharge parts extending from sides at ends of the spacer body part towards the inside of the spacer body part and second insulating liquid discharge parts provided within the spacer body part at intervals.

In embodiments, the intervals between the second insulating liquid discharge parts may be adjusted on the spacer body part.

In embodiments, a movement groove may be formed in the spacer body part, the movement groove being configured to enable the second insulating liquid discharge part to be moved.

In embodiments, the spacer further may include a fixing part configured to fix the second insulating liquid discharge part to the movement groove after the second insulating liquid discharge part is moved on the spacer body part.

In embodiments, graduations may be indicated in the spacer body part adjacently to the movement groove.

In embodiments, a method of coating an electrode plate using a slot die, the slot die including: an upper die, a lower die provided under the upper die, and a spacer interposed between the upper die and lower die and forming a gap between the upper die and the lower die, wherein the spacer comprises a spacer body part coupled to the upper die and the lower die and a plurality of insulating liquid discharge parts provided on a side of the spacer body part and configured to discharge an insulating liquid may include coating the insulating liquid adjacent to ends of slurry as the slurry is discharged through an area of the spacer body part other than the plurality of insulating liquid discharge parts, with the insulating liquid being discharged from the insulating liquid discharge parts.

In embodiments, insulating liquid discharge part of the spacer includes a discharge body part connected to the spacer body part and a discharge head part including an insulating liquid flow path and a discharge hole, with the discharge head part being coupled to the discharge body part, and the method further comprise adjusting the amount of the insulating liquid discharged by replacing the discharge head part with another discharge head part in which a step having a different height has been formed in a discharge hole.

According to the embodiments of the present disclosure, the plurality of insulating liquid discharge parts that discharges an insulating liquid is provided. When an electrode plate is coated through the slot die, slurry is discharged through the area other than the insulating liquid discharge part, and an insulating liquid is discharged from the insulating liquid discharge part so that the insulating liquid is coated adjacent to ends of the discharged slurry. Accordingly, a short attributable to a contact between a positive electrode and a negative electrode when an electrode assembly is manufactured can be prevented.

According to the embodiments of the present disclosure, in order to adjust the amount of discharge of insulating liquid, a step is formed in the discharge hole through which the insulating liquid is discharged. Accordingly, it is possible to reduce the occurrence of an electrode plate thickness difference when the insulating liquid is excessively coated on both ends of slurry coated on the electrode plate.

According to the embodiments of the present disclosure, the discharge head part including the discharge hole is detachably coupled to the discharge body part. Accordingly, the amount of discharge of an insulating liquid can be adjusted by replacing the discharge head part in which the step has been formed in the discharge hole at a different height. It is therefore possible to reduce material costs and labor costs for replacement because only a desired discharge head part has to be fabricated and there is no need to replace the entire spacer.

According to the embodiments of the present disclosure, a target coating width can be adjusted in a coating process because an interval between the insulating liquid discharge parts is adjusted on the spacer body part.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The drawings illustrate preferred embodiments of the present disclosure, and help to further understand the technical spirit of the present disclosure. But the present disclosure should is not limited to the embodiments depicted in the drawings.
FIG. 1 illustrates a cylindrical lithium secondary battery according to an embodiment of the present disclosure.
FIG. 2 illustrates a prismatic lithium secondary battery according to an embodiment of the present disclosure.
FIGS. 3 and 4 illustrate pouch type lithium secondary batteries according to embodiments of the present disclosure.
FIGS. 5A and 5B illustrates a slot die including a spacer according to embodiments of the present disclosure.
FIG. 6 illustrates a spacer according to embodiments of the present disclosure.
FIG. 7 illustrates the discharge head part of the spacer according to embodiments of the present disclosure.
FIG. 8 is a side cross-sectional view of the discharge head part of the spacer according to embodiments of the present disclosure.
FIG. 9 illustrates side cross-sectional views of an insulating liquid discharge part of the spacer according to embodiments of the present disclosure.
FIG. 10 illustrates another embodiment of a spacer according to embodiments of the present disclosure.
FIG. 11 illustrates an electrode plate that is coated by the spacer according to embodiments of the present disclosure.
FIG. 12 is a flowchart of a method of coating an electrode plate using a slot die according to embodiments of the present disclosure.

### Detailed description

Exemplary embodiments of the present disclosure will be described below in detail with reference to the accompanying drawings. Prior to the description, it is noted that the terms or words used in this specification and claims should not be construed as being limited to common or dictionary meanings but instead should be understood to have meanings and concepts consistent with the spirit of the present disclosure based on the principle that an inventor can define the concept of each term suitably in order to describe his/her own invention in the best way possible. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

Secondary batteries according to the present disclosure include coin types, cylindrical types, prismatic types, and pouch types. Initially, examples of cylindrical and prismatic secondary batteries are described. But the present disclosure is not limited to the specific descriptions.

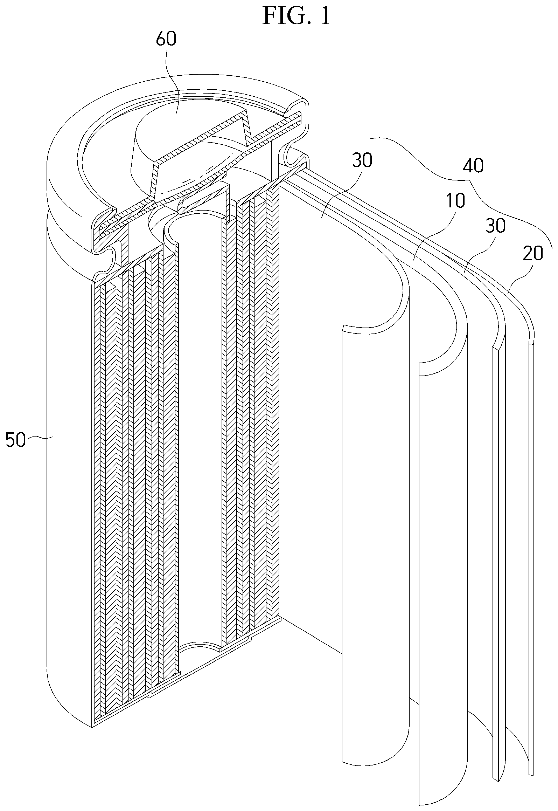

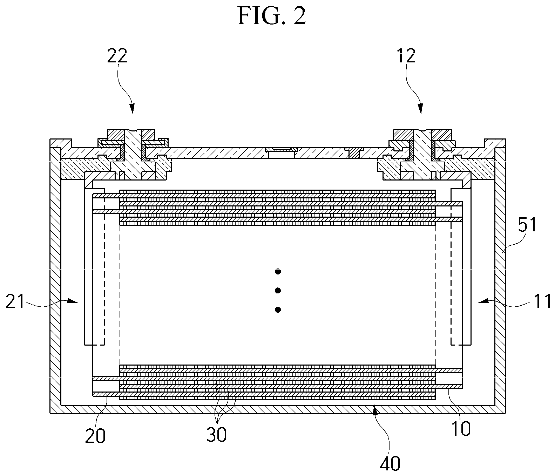

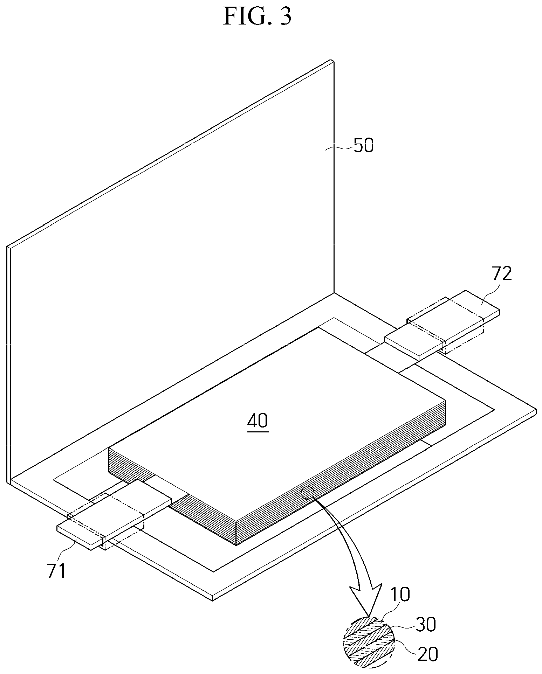

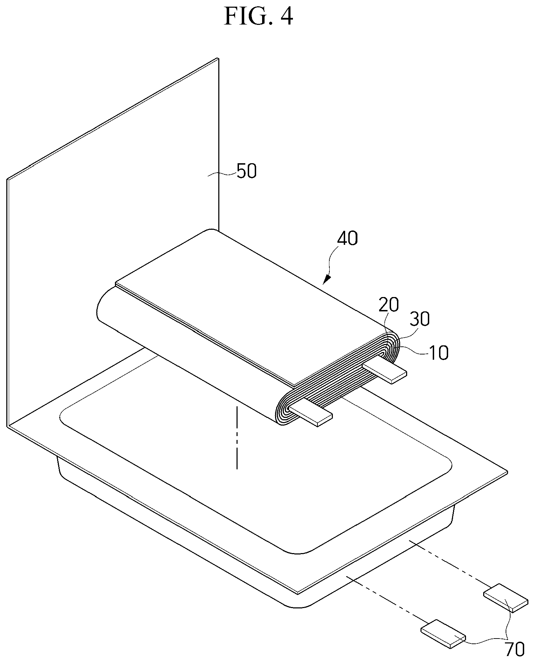

FIGS. 1 to 4 are schematic diagrams illustrating lithium secondary batteries according to implementation examples. FIG. 1 illustrates a cylindrical lithium secondary battery. FIG. 2 illustrates a prismatic type secondary battery. FIGS. 3 and 4 illustrate pouch type secondary batteries. Referring to FIG. 1 to 4, a lithium secondary battery 1 may include an electrode assembly 40 in which a separator 30 is interposed between a first electrode plate 10 and a second electrode plate 20, with a case 50 accommodating the electrode assembly 40. The first electrode plate 10, the second electrode plate 20, and the separator 30 may be impregnated in an electrolyte. As illustrated in FIG. 1, the lithium secondary battery 1 may include a sealing member 60 that seals the case 50. As shown in FIG. 2, the lithium secondary battery 1 may include a first electrode lead tab 11, a first electrode terminal 12, a second electrode lead tab 21, and a second electrode terminal 22. As illustrated in FIGS. 3 and 4, the lithium secondary battery 1 may include an electrode tab 70 that forms an electrical passage for inducing a current generated in the electrode assembly 40 toward outside of the secondary battery 1, with the electrode tab 70 including a first electrode tab 71 and a second electrode tab 72.

The electrode assembly 40 may be formed by winding or stacking a body including the first electrode plate 10, the second electrode plate 20, and the separator 30, each of which is formed in a plate or film shape. In a winding stack body, the winding axis of the electrode assembly 40 may be parallel to the length direction of the case. While the electrode assembly 40 may be a stack type or a winding type, the shape of the electrode assembly 40 is not limited in the present disclosure. The first electrode plate 10 of the electrode assembly 40 may function as a positive electrode, the second electrode plate 20 may function as a negative electrode, and vice versa.

The first electrode plate 10 may be formed by applying a first electrode active material, such as graphite or carbon, to a first electrode collector plate formed of metal foil, such as copper, a copper alloy, nickel, or a nickel alloy. The first electrode plate 10 may include a first electrode tab in the form of a first uncoated part, which is an area of the first electrode plate 10 in which the first electrode active material is not applied.

The second electrode plate 20 may be formed by applying a second electrode active material, such as transition metal oxide, to a material formed of metal foil, such as aluminum or an aluminum alloy. The second electrode plate 20 may include a second electrode tab in the form of a second uncoated part, which is an area in which the second electrode active material is not applied.

The separator 30 may function to prevent a short-circuit between the first electrode plate 10 and the second electrode plate 20 while permitting a movement of lithium ions. The separator 30 may comprise, for example, a polyethylene film, a polypropylene film, or a polyethylene-polypropylene film.

A plurality of secondary batteries in the form of the examples depicted in FIGS. 1 to 4 may be gathered to constitute a plurality of battery cells and accommodated in a battery case. A battery case according to embodiments of the present disclosure may include a support part that supports a hook after the hook and a hook hole are fastened and can maintain the state in which the hook and the hook hole have been fastened because the breakaway of the hook attributable to the retreat of the hook can be prevented when an impact is applied to a battery pack. Hereinafter, a battery case according to embodiments of the present disclosure and a method of manufacturing the battery case are described with reference to drawings.

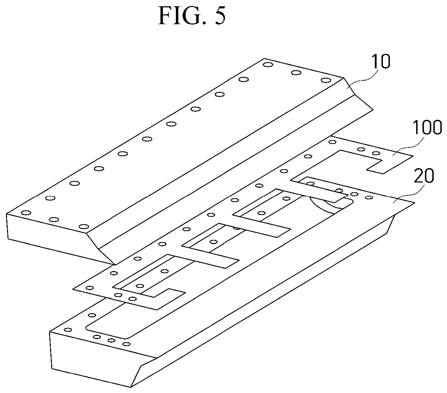

FIG. 5 is a diagram illustrating a slot die including a spacer according to embodiments of the present disclosure. A slot die including a spacer according to embodiments of the present disclosure may include an upper die 10, a lower die 20, and a spacer 100.

The slot die may be divided into the upper die 10 and the lower die 20 provided under the upper die 20. The spacer 100 may be interposed between the upper die 10 and the lower die 20, and may form a gap (passage) through which slurry can move between the upper die 10 and the lower die 20.

The slot die may be connected to an external slurry supply source (not illustrated). The slot die may be supplied with slurry from the external slurry supply source and may coat an electrode with the slurry by discharging the slurry. In embodiments, the external slurry supply source may be a slurry tank.

Hereinafter, the spacer 100 according to embodiments of the present disclosure is described in detail with reference to drawings.

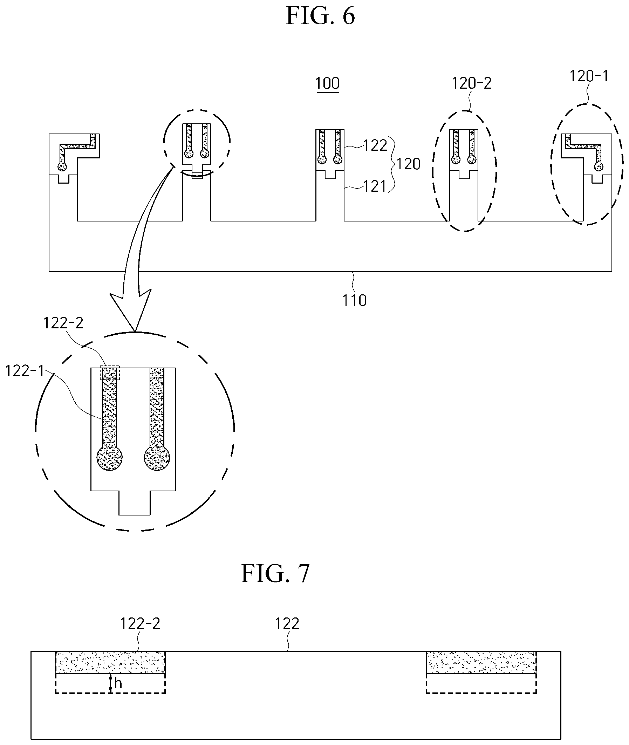

FIG. 6 is a diagram illustrating a spacer according to embodiments of the present disclosure. Referring to FIG. 6, the spacer 100 according to embodiments of the present disclosure may include a spacer body part 110 and a plurality of insulating liquid discharge parts 120.

The spacer body part 110 may be coupled to the upper die 10 and the lower die 20. In embodiments, the spacer body part 110 be plate shaped, with a part of the spacer body part being open.

The plurality of insulating liquid discharge parts 120 may be provided on one side of the spacer body part 110, and the liquid discharge parts 120 may be configured to discharge an insulating liquid. In embodiments, the insulating liquid discharge parts 120 may each be a spacer shim that is provided in the spacer body part 100, with the shims determining the width of slurry discharged. Accordingly, when an electrode plate is coated through the slot die, slurry is discharged through an area of the spacer body part 110 other than the insulating liquid discharge part 120 and an insulating liquid is discharged from the insulating liquid discharge part 120 such that the insulating liquid is coated on both ends of the discharged slurry.

The insulating liquid discharge part 120 may include a discharge body part 121 connected to the spacer body part 110. The insulating liquid discharge part 120 may also include a discharge head part 122 including an insulating liquid flow path 122-1 and a discharge hole 122-2 and coupled to the discharge body part 121. The insulating liquid flow path 122-1 may be connected to an insulating liquid supply part (not illustrated) such that the insulating liquid flow path 122-1 may be supplied with an insulating liquid from the insulating liquid supply part and may provide the insulating liquid to the discharge hole 122-2. The insulating liquid discharged through the discharge hole 122-2 may be applied and coated at ends of discharged slurry.

The insulating liquid discharge part 120 may include first insulating liquid discharge parts 120-1 that are formed at parts that extend from the ends of the spacer body part 110 at opposite sides thereof to the inside of the spacer body part 110. The insulating liquid discharge part 120 may further include second insulating liquid discharge parts 120-2 provided within the spacer body part 110 at arbitrary intervals.

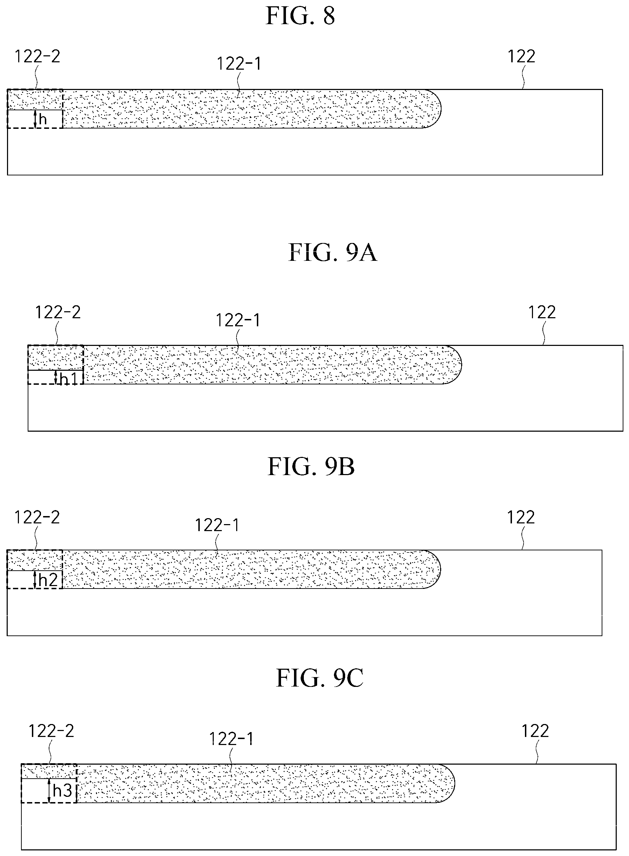

A detailed construction of the discharge head part 122 of each insulating liquid discharge part 120 is illustrated in FIGS. 7 and 8.

FIG. 7 is a front view illustrating the discharge head part of the spacer according to embodiments of the present disclosure. FIG. 8 is a side cross-sectional view illustrating the discharge head part of the spacer according to embodiments of the present disclosure.

The discharge head part 122 may include the insulating liquid flow path 122-1 and the discharge hole 122-2. As illustrated in FIG. 8, in order to adjust the amount of discharge of an insulating liquid, a step "h" may be formed in the discharge hole 122-2 of the discharge head part 122 through which the insulating liquid is discharged. The discharge head part 122 may adjust the step "h" of the discharge hole 122-2 right before the insulating liquid is discharged so that the insulating liquid discharge part 120 can discharge a proper amount of the insulating liquid.

FIG. 9 illustrates side cross-sectional views of examples of an insulating liquid discharge part of the spacer according to embodiments of the present disclosure.

Referring to FIG. 9, steps h1, h2, and h3 having different heights may be formed in the discharge holes 122-2 of the discharge head part 122 through which insulating liquids are discharged. The discharge head part 122 of the insulating liquid discharge part 120 may be detachably coupled to the discharge body part 121. Accordingly, the amount of an insulating liquid that is discharged can be adjusted by replacing the discharge head part 122 in which each of the steps h1, h2, and h3 having a different height has been formed. For example, as illustrated in FIG. 9, the step "h1" may be formed to be 25% of the height of the insulating liquid flow path 122-1, the step "h2" may be formed to be 50% of the height of the insulating liquid flow path 122-1, and the step "h3" may be formed to be 75% of the height of the insulating liquid flow path 122-1. The discharge head part 122 may be detachable for each step height, and may be replaced depending on a desired discharge amount according to circumstances. The ratios of the steps illustrated in FIG. 9 are exemplary, and the discharge head part 122 having steps having various heights may be manufactured according to circumstances.

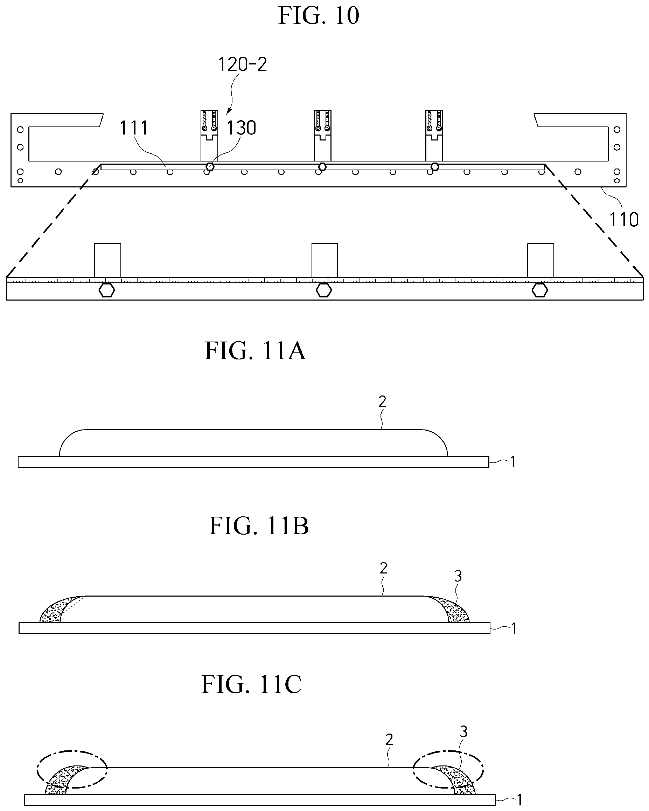

FIG. 10 is a diagram illustrating another embodiment of a spacer according to embodiments of the present disclosure.

Referring to FIG. 10, according to another embodiment of the spacer, an interval between the second insulating liquid discharge parts 120-2 may be adjusted on the spacer body part 110. As described above, the second insulating liquid discharge part 120-2 function as a spacer shim and determine the width of the discharged slurry. In embodiments, the width of slurry discharged may be adjusted by adjusting the interval between the second insulating liquid discharge parts 120-2 on the spacer body part 110. Accordingly, if the width of slurry discharged needs to be changed, only the interval between the second insulating liquid discharge parts 120-2 needs to be adjusted, and the entire spacer need not be replaced. Accordingly, material costs and labor costs can be reduced.

A movement groove 111 that allows the second insulating liquid discharge part 120-2 to move may be formed in the spacer body part 110 so that the interval between the second insulating liquid discharge parts 120-2 can be adjusted. The spacer 100 may further include a fixing part 130 for fixing the second insulating liquid discharge part 120-2 to the movement groove 111 after the second insulating liquid discharge part 120-2 is moved on the spacer body part 110. The fixing part 130 may be, for example, a fixing screw or a fixing bolt. A hole into which the fixing part 130 may be inserted may be formed in the discharge body part of the second insulating liquid discharge part 120-2.

In embodiments, graduations may be provided on the spacer body part 110 adjacent to the movement groove 111. The spacer body part 110 can thereby be configured to reduce human error and allow the second insulating liquid discharge part 120-2 to be moved at a desired interval due to the graduations indicated at the top of the fixing part 130.

FIG. 11 is a diagram illustrating an electrode plate that is coated by the spacer according to embodiments of the present disclosure.

FIG. 11(a) illustrates an electrode plate 1 on which only slurry 2 has been applied without applying the coating of an insulating liquid. In the case of the electrode plate on which the slurry is applied without the insulating liquid, when there is contact between a positive electrode and a negative electrode, a short may occurs. In severe cases, the short can lead to a fire.

When the spacer according to embodiments of the present disclosure is used, as illustrated in FIG. 11(b), the slurry 2 and an insulating liquid 3 are simultaneously coated. In this process, the insulating liquid 3 may be applied to opposite ends of the slurry 2. However, as illustrated in FIG. 11(c), if the insulating liquid 3 is excessively coated at ends of the slurry 2,the insulating liquid 3 may form a coating that is thicker than the thickness at the center of the electrode plate. This is called electrode plate bulging. The electrode plate bulging may reduce line mobility and lower the electrode plate yield because an electrode plate may break when the electrode plate is produced.

In order to solve such problems, the spacer according to embodiments of the present disclosure can reduce excessive coating of the insulating liquid at ends of slurry coated on the electrode plate, because a step is formed in the discharge hole through which an insulating liquid is discharged. The step allows for adjustment of the amount of insulating liquid that is discharged.

According to embodiments of the present disclosure, the discharge head part including the discharge hole is detachably coupled to the discharge body part. Accordingly, the amount of an insulating liquid discharged can be adjusted by replacing the discharge head part in which the step has been formed in the discharge hole. Thus, material costs and labor costs for replacement can be reduced because only a desired discharge head part has to be fabricated and the entire spacer need not be replaced.

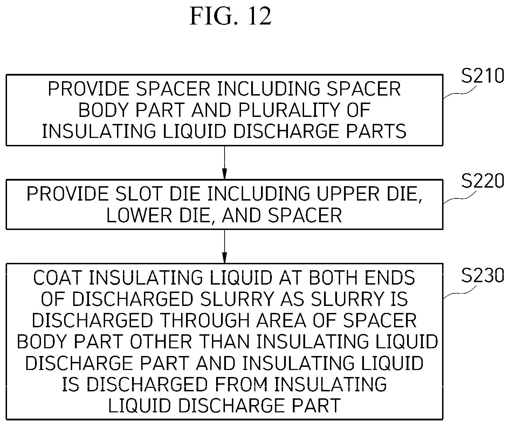

FIG. 12 is a flowchart for describing a method of coating an electrode plate using a slot die according to embodiments of the present disclosure.

Referring to FIG. 12, the method of coating an electrode plate using a slot die according to embodiments of the present disclosure may include steps S210 through step S230.

In step S210, the spacer including the spacer body part coupled to the upper die and lower die of the slot die and the plurality of insulating liquid discharge parts may be provided on one side of the spacer body part and configured to discharge an insulating liquid. In embodiments, step S210 may include a step of providing the insulating liquid discharge part including the discharge body part connected to the spacer body part and the discharge head part including the insulating liquid flow path and the discharge hole and coupled to the discharge body part. The step S210 may also include a step of adjusting the amount of an insulating liquid discharged by replacing the discharge head part in which a step has been formed in the discharge hole at a different height.

Step S220 may provide the slot die including the upper die, the lower die provided under the upper die, and the spacer interposed between the upper die and the lower die.

Step S230 may be coating an insulating liquid at ends of discharged slurry as the slurry is discharged through an area of the spacer body part other than the insulating liquid discharge part and an insulating liquid is discharged from the insulating liquid discharge part.

The method of coating an electrode plate using a slot die according to embodiments of the present disclosure has been described with reference to the flowcharts presented in the drawings. For a simplified description, the method has been illustrated and described as a series of blocks, but the present disclosure is not limited to the sequence of the blocks, and some blocks may be performed in a sequence different from or simultaneously with that of other blocks, which has been illustrated and described in this specification. Various other branches, flow paths, and sequences of blocks which achieve the same or similar results may be implemented. Furthermore, all the blocks illustrated in order to implement the method described in this specification may not be required.

In the description given with reference to FIG. 12, each of the steps may be further divided into additional steps or the steps may be combined into smaller steps depending on an implementation example of the present disclosure. Furthermore, some of the steps may be omitted, if necessary, and the sequence of the steps may be changed. Furthermore, the contents of FIGS. 1 to 11 may be applied to the contents of FIG. 12. Furthermore, the contents of FIG. 12 may be applied to the contents of FIGS. 1 to 11.

Hereinafter, materials which may be used in a slurry while coating in a spacer, a slot die, and a method of coating an electrode plate using a slot die according to an embodiment of the present disclosure are described.

A compound (e.g., a lithiated intercalation compound) capable of reversible intercalation and deintercalation of lithium may be used as a positive electrode active material. Specifically, one or more of complex oxides of metal, selected among cobalt, manganese, nickel, and combinations thereof, and lithium may be used as the positive electrode active material.

The complex oxide may be lithium transition metal complex oxide. A detailed example of the complex oxide includes lithium nickel-based oxide, lithium cobalt-based oxide, lithium manganese-based oxide, a lithium ferrous phosphate-based compound, cobalt-free nickel-manganese-based oxide, or combinations thereof.

For example, a compound that is represented as one of the following chemical formulas may be used: LiaₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8). In these chemical formulas, A may be Ni, Co, Mn, or a combination of thereof. X may be Al, Ni, Co, Mn, Cr, Fe, Mg, Sr, V, a rare earth element, or a combination of thereof; D may be O, F, S, P, or a combination of thereof. G may be Al, Cr, Mn, Fe, Mg, La, Ce, Sr, V, or a combination of thereof. L¹ may be Mn, Al, or a combination of thereof.

A positive electrode for a lithium secondary battery may include a current collector and a positive electrode active material layer formed on the current collector. The positive electrode active material layer may include the positive electrode active material, and the positive electrode active material layer may may further include a binder and/or a conductive material.

The amount of the positive electrode active material may be 90 wt.% to 99.5 wt.% with respect to the positive electrode active material layer 100 wt.%. The amount of the binder and the conductive material may be 0.5 wt.% to 5 wt.% with respect to the positive electrode active material layer 100 wt.%.

Aluminum may be used as the current collector, but the present disclosure may not be limited thereto.

A negative electrode active material may include a material capable of reversible intercalation/deintercalation with respect to lithium ions, lithium metal, an alloy of lithium metal, a material capable of doping and dedoping with respect to lithium, or transition metal oxide.

The material capable of reversible intercalation/deintercalation with respect to lithium ions may include a carbon-based negative electrode active material, for example, crystalline carbon, amorphous carbon, or a combination thereof. An example of the crystalline carbon include graphite7s, such as natural graphite or synthetic graphite. Examples of the amorphous carbon include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination thereof.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and the negative electrode active material layer may further include a binder and/or a conductive material. The negative electrode active material layer may include, for example, the negative electrode active material of 90 wt.% to 99 wt.%, the binder of 0.5 wt.% to 5 wt.%, and the conductive material of 0 wt.% to 5 wt.%.

A nonaqueous-based binder, an aqueous-based binder, a dry binder, or a combination of thereof may be used as the binder. If the aqueous-based binder is used as a binder for the negative electrode, the binder for the negative electrode may further include a cellulose-series compound capable of increasing viscosity.

One of a nickel foil, stainless steel foil, titanium foil, nickel foam, copper foam, a polymer base on which a conductive metal has been coated, and a combination thereof may be used as a current collector for the negative electrode.

Although the present disclosure has been described above in connection with embodiments and drawings, the present disclosure is not limited to the embodiments. A person having ordinary knowledge in the art to which the present disclosure pertains may modify and change the present disclosure within the technical spirit of the present disclosure

### <DESCRIPTION OF REFERENCE NUMERALS>

| | | | |
|---|---|---|---|
| 10: | upper die | 20: | lower die |
| 100: | spacer | 110: | spacer body part |
| 111: | movement groove | | |
| 120: | insulating liquid discharge part | | |
| 120-1: | first insulating liquid discharge part | | |
| 120-2: | second insulating liquid discharge part | | |
| 121: | discharge body part | 122: | discharge head part |
| 122-1: | insulating liquid flow path | | |
| 122-2: | discharge hole | 130: | fixing part |

## Claims

1. A spacer (100) configured to be interposed between an upper die (10) and lower die (20) of a slot die to form a gap between the upper die and the lower die, the spacer comprising:
a spacer body part (110) configured to be coupled to the upper die (10) and the lower die (20); and
a plurality of insulating liquid discharge parts (120) provided on a side of the spacer body part (110) and configured to discharge an insulating liquid,
wherein the spacer (100) is configured such that when an electrode plate is coated through the slot die,
a) slurry is discharged through an area of the spacer body part (110) other than the insulating liquid discharge parts (120), and
b) the insulating liquid is discharged through the insulating liquid discharge parts (120),
so that the insulating liquid is coated adjacent to ends of the discharged slurry.

2. The spacer (100) as claimed in claim 1, wherein a step (h) is formed in a discharge hole (122-2) of the insulating liquid discharge part (120) through which the insulating liquid is discharged.

3. The spacer (100) as claimed in claim 2, wherein the insulating liquid discharge part (120) comprises:
a discharge body part (121) connected to the spacer body part (110); and
a discharge head part (122) forming an insulating liquid flow path (122-1) and including the discharge hole (122-2), the discharge head part (122) being coupled to the discharge body part (121).

4. The spacer (100) as claimed in claim 3, wherein the discharge head part (122) is detachably coupled to the discharge body part (121), and
wherein the insulating liquid discharge part (120) is configured to adjust an amount of the insulating liquid discharged.

5. The spacer (100) according to any of the previous claims, wherein the insulating liquid discharge part (120) comprises:
first insulating liquid discharge parts (120-1) extending from sides at ends of the spacer body part (110) towards an inside of the spacer body part (110); and
second insulating liquid discharge parts (120-2) provided within the spacer body part (110) at intervals.

6. The spacer (100) as claimed in claim 5, wherein the intervals between the second insulating liquid discharge parts (120-2) are adjusted on the spacer body part (110).

7. The spacer (100) as claimed in claim 6, wherein a movement groove (111) is formed in the spacer body part (110), the movement groove (111) being configured to enable the second insulating liquid discharge part (120-2) to be moved.

8. The spacer (100) as claimed in claim 7, further comprising a fixing part (130) configured to fix the second insulating liquid discharge part (120-2) to the movement groove (111).

9. The spacer (100) as claimed in claims 7 or 8, wherein graduations are indicated in the spacer body part (110) adjacent to the movement groove (110).

10. A slot die comprising:
an upper die (10);
a lower die (20) provided under the upper die (10); and
a spacer (100) interposed between the upper die (10) and lower die (20) and forming a gap between the upper die (10) and the lower die (20), wherein the spacer (100) is configured according to any of the previous claims.

11. A method of coating an electrode plate using a slot die, preferably using a slot die being configured according to any of the previous slot die claims, the slot die including:
an upper die (10), a lower die (20) provided under the upper die (10), and
a spacer (200) interposed between the upper die (10) and lower die (20) and forming a gap between the upper die (10) and the lower die (20),
wherein the spacer (100) comprises a spacer body part (110) coupled to the upper die (10) and the lower die (20) and a plurality of insulating liquid discharge parts (120) provided on a side of the spacer body part (110) and configured to discharge an insulating liquid,
the method comprising:
coating the insulating liquid adjacent to ends of a slurry as the slurry is discharged through an area of the spacer body part (110) other than the plurality of insulating liquid discharge parts (120), with the insulating liquid being discharged from the insulating liquid discharge parts (120).

12. The method as claimed in claim 11, wherein the insulating liquid discharge part (120) of the spacer (100) includes a discharge body part (121) connected to the spacer body part (110) and a discharge head part (122) comprising an insulating liquid flow path (122-1) and a discharge hole (122-2), with the discharge head part (122) being coupled to the discharge body part (121); and
wherein the method further comprises the step of adjusting an amount of the insulating liquid discharged by replacing the discharge head part (122) with another discharge head part (122) in which a step (h) having a different height has been formed in the discharge hole.
